# EUROPEAN PATENT SPECIFICATION

(11) **EP 1 312 639 B1**
(45) Date of publication and mention of the grant of the patent: **30.05.2007**
(21) Application number: 02025011.4
(22) Date of filing: 08.11.2002
(51) Int. Cl.: C08L 15/00, C08K 5/548

(54) **Rubber composition comprised of functionalized elastomer and starch composite with coupling agent and tire having at least one component thereof**
Kautschukzusammensetzung bestehend aus Elastomer mit funktionellen Gruppen, Stärke/Weichmacher-Composit und Kupplungsmittel sowie Reifen mit mindestens einem Bauteil hergestellt aus dieser Zusammensetzung
Composition de caoutchouc contenant un élastomèr fonctionnalisé, un matériau composite à base d'amidon et un agent de couplage et pneu comportant au moins un élément à base de cette composition

(30) Priority: 15.11.2001 US 335907 P
(43) Date of publication of application: 21.05.2003
(73) Proprietor: THE GOODYEAR TIRE & RUBBER COMPANY, Akron, Ohio 44316-0001 (US)
(72) Inventor: Agostini, Giorgio, 7733 Colmar-Berg (LU); Corvasce, Filomeno Gennaro, 9170 Mertzig (LU); Thielen, Georges Marcel Victor, 4995 Schouweiler (LU)
(74) Representative: Kutsch, Bernd

(56) References cited:
- EP-A- 0 644 235
- WO-A-01/49785
- US-B1- 6 273 163

## Description

### Field of the Invention

The present invention relates to a rubber composition comprised of a functionalized elastomer which contains a dispersion of a starch/plasticizer composite and coupling agent and to pneumatic tires having at least one component comprised of such rubber composition. The rubber composition may also contain one or more additional elastomers and may contain at least one particulate reinforcing agent selected from, for example, precipitated silica aggregates, carbon black and carbon black which contains silica domains on its surface. Such tire component can be, for example, its circumferential tread or other component of the tire.

### Background of the Invention

Starch, particularly starch/plasticizer composites, have been suggested for use in elastomer formulations for various purposes, including for various tire components. For example see 5,672,639.

Such starch/plasticizer compositions might be used alone or in conjunction with silica and/or carbon black reinforcing fillers or also with other fillers such as, for example, recycled, or ground, vulcanized rubber particles, short fibers, kaolin clay, mica, talc, titanium oxide and limestone. Such short fibers can be, for example, fibers of cellulose, aramid, nylon, polyester and carbon composition.

US-A- 5,403,923, 5,258,430, and 4,900,361 further disclose a preparation and use of various starch compositions.

Historically, various elastomer compositions have been disclosed which contain one or more of starch/plasticizer composite, silica reinforcing filler, silica coupling agent and functionalized elastomer such as, for example, epoxidized natural rubber. For example, see patent publications such as US-B1-6,273,163, WO 01/49785-A and EP-A-0644235.

The term "phr" if used herein, and according to conventional practice, refers to "parts of a respective material per 100 parts by weight of rubber, or elastomer".

In the description of this invention, the terms "rubber" and "elastomer" if used herein, may be used interchangeably, unless otherwise prescribed. The terms "rubber composition", "compounded rubber" and "rubber compound", if used herein, are used interchangeably to refer to "rubber which has been blended or mixed with various ingredients and materials" and such terms are well known to those having skill in the rubber mixing or rubber compounding art.

The term "carbon black" as used herein means "carbon blacks having properties typically used in the reinforcement of elastomers, particularly sulfur curable elastomers".

The term "silica" as used herein can relate to precipitated or fumed silica and typically relates to precipitated silica aggregates, which is well known to those having skill in such art.

A reference to an elastomer's Tg refers to its glass transition temperature, which can conveniently be determined by a differential scanning calorimeter at a heating rate of 10°C per minute (e.g. ASTM 3418).

### Summary and Practice of the Invention

In accordance with one aspect of this invention, a rubber composition is provided which comprises, based upon parts by weight per 100 parts by weight elastomer (phr):
(A) 100 parts by weight of at least one diene-based elastomer comprised of:
   (1) 20 to 50 phr of at least one elastomer selected from polymers of isoprene and/or 1,3-butadiene and from copolymers of styrene with isoprene and/or 1,3-butadiene, and correspondingly
   (2) 50 to 80 phr of at least one functionalized diene-based elastomer selected from:
      (a) functionalized diene-based elastomer which contains one or more one or more functional groups available for reaction with a coupling agent, wherein said functional groups are selected from at least one of hydroxyl and carboxyl groups, and
      (b) functionalized diene-based elastomer which contains at least one functional group selected from isocyanate groups, blocked isocyanate groups, epoxide groups, amine groups (primary, secondary, tertiary amine groups), alkoxysilane groups, hydroxypropyl methacrylate (HPMA) groups, acrylate groups and anhydride groups, and, correspondingly,
(B) 30 to 180 phr of at least one elastomer reinforcing filler composed of:
   (1) one to 180 phr of at least one starch/synthetic plasticizer composite, and
   (2) from 29 to 179 phr of at least one of carbon black, precipitated silica aggregates, and silica modified carbon black which contains silica domains on its surface, and
(C) a coupling agent having a moiety reactive with hydroxyl groups contained on the surface of said starch composite, with hydroxyl and/or carboxyl groups contained on said functionalized diene-based elastomer, with hydroxyl groups contained on the surface of said aggregates of precipitated silica and with hydroxyl groups contained on the surface of silica domains on the surface of said silica-treated carbon black, if said silica and/or silica-treated carbon black are used, wherein said coupling agent has an additional moiety, moiety interactive with said elastomer which contains said functional groups and with said additional diene-based elastomer if used.

In practice, preferably said starch is composed of amylose units and amylopectin units in a ratio of 15/85 to 35/65, alternatively 20/80 to 30/70, and has a softening point according to ASTM No. D1228 in a range of 180°C to 220°C; and the starch/plasticizer has a softening point in a range of 110°C to 170°C according to ASTM No. D1228.

The moiety of the coupling agent reactive with the starch/plasticizer composite, diene-based elastomer which contains said functional groups and hydroxyl groups on said silica surfaces is generally considered herein as being capable of reacting with at least one or more hydroxyl groups which may be contained on their surfaces and possibly with other reactive groups thereon.

Representative of coupling agent is for example a coupling agent of the representative Formula I:

(I) (OR)₃ - Si - R² - Sₙ - R² - (OR)₃

wherein R is an alkyl radical selected from one or more of methyl and ethyl radicals, preferably an ethyl radical, R² is an alkyl radical containing from 2 through 6 carbon atoms, preferably a methyl or propyl and more preferably a propyl radical, and n is a value of from 2 to 8 with an average of either from 2 to 2.6 of from 3.5 to 4.

Thus, such coupling agent may be, for example, a bis(3-alkoxysilylalkyl) polysulfide having an average number of sulfur atoms in its polysulfidic bridge in a range of from 2 to 2.6 or from 3.5 to 4.

Representative of such coupling agents is, for example, bis(3-ethoxysilylpropyl) polysulfide having an average of from 2 to 2.6 or of from 3.5 to 4, sulfur atoms in its polysulfidic bridge.

For the purposes of this invention, it is intended that the alkoxy groups, namely the (OR)₃- groups, on the coupling agent are primarily reactive with said hydroxyl and/or carboxyl groups of said diene-based elastomer which contains one or more of such reactive functional groups.

It is to be appreciated that such alkoxy groups are also reactive with hydroxyl groups of said starch/plasticizer composite, said precipitated silica aggregates and said silica on said carbon black which contains silica domains on its surface.

In this manner, then, it is contemplated that a complex network of reinforcement of the rubber composition is obtained by combination of reactions in situ within the elastomer host(s).

The diene-based elastomer which contains reactive hydroxyl groups and/or carboxyl groups, is prepared by organic solvent polymerization of isoprene and/or 1,3-butadiene or copolymerization of styrene or alpha methylstyrene with isoprene and/or 1,3-butadiene.

The introduction of reactive hydroxyl and/or carboxyl groups on said diene-based elastomer may be accomplished by, for example, radicalar grafting one or more functional groups of interest onto the polymer backbone, copolymerization of polymerizable materials which contain one or more functional groups of interest, deprotection of protected copolymerized groups, addition of a fraction of unsaturations, and for end terminated polymers a reaction of the living polymer chain with a molecule containing the function of interest.

Exemplary of such diene-based elastomers which contain hydroxyl and/or polar functional groups and multifunctional compatibilizers are, for example hydroxyl terminated polybutadienes, hydroxyl terminated polyisoprenes, anhydride-containing polybutadiene and/or polyisoprene elastomers, using, for example anhydrides from the Sartomer Company as the Ricobond^{™} series of anhydrides, urethane-containing polybutadiene and/or polyisoprene, using, for example, urethane from the Sartomer Company as CN302^{™}, diacrylate-containing polybutadiene and/or polyisoprene using, for example diacrylate from the Sartomer Company as CN303^{™}, epoxide-containing elastomer such as, for example, epoxidized natural rubber (epoxidized cis 1,4-polyisoprene), multifunctional additive-containing polybutadiene and/or polyisoprene, using a material, for example, vinyl triethoxy silane-methyl methacrylate copolymers, bis(triethoxy) ethane and bis[3-(triethoxysilyl)propyl] ethane.

In the practice of this invention, the starch/plasticizer composite may be desired to be used, for example, as a free flowing, dry powder or in a free flowing, dry pelletized form. In practice, it is desired that the synthetic plasticizer itself is compatible with the starch, and has a softening point lower than the softening point of the starch so that it causes the softening of the blend of the plasticizer and the starch to be lower than that of the starch alone. This phenomenon of blends of compatible polymers of differing softening points having a softening point lower than the highest softening point of the individual polymer(s) in the blend is well known to those having skill in such art.

For the purposes of this invention, the plasticizer effect for the starch/plasticizer composite, (meaning a softening point of the composite being lower than the softening point of the starch), can be obtained through use of a polymeric plasticizer such as, for example, poly(ethylenevinyl alcohol) with a softening point of less than 160°C. Other plasticizers, and their mixtures, are contemplated for use in this invention, provided that they have softening points of less than the softening point of the starch, and preferably less than 160°C, which might be, for example, one or more copolymers and hydrolyzed copolymers thereof selected from ethylene-vinyl acetate copolymers having a vinyl acetate molar content of from 5 to 90, alternatively 20 to 70, percent, ethylene-glycidal acrylate copolymers and ethylene-maleic anhydride copolymers. As hereinbefore stated hydrolysed forms of copolymers are also contemplated. For example, the corresponding ethylene-vinyl alcohol copolymers, and ethylene-acetate vinyl alcohol terpolymers may be contemplated so long as they have a softening point lower than that of the starch and preferably lower than 160°C.

In general, the blending of the starch and plasticizer involves what are considered or believed herein to be relatively strong chemical and/or physical interactions between the starch and the plasticizer.

In general, the starch/plasticizer composite has a desired starch to plasticizer weight ratio in a range of 0.5/1 to 4/1, alternatively 1/1 to 2/1, so long as the starch/plasticizer composition has the required softening point range, and preferably, is capable of being a free flowing, dry powder or extruded pellets, before it is mixed with the elastomer(s).

While the synthetic plasticizer(s) may have a viscous nature at room temperature, or at about 23°C and, thus, considered to be a liquid for the purposes of this description, although the plasticizer may actually be a viscous liquid at room temperature since it is to be appreciated that many plasticizers are polymeric in nature.

Representative examples of synthetic plasticizers are, for example, poly(ethylenevinyl alcohol), cellulose acetate and diesters of dibasic organic acids, so long as they have a softening point sufficiently below the softening point of the starch with which they are being combined so that the starch/plasticizer composite has the required softening point range. Preferably, the synthetic plasticizer is selected from at least one of poly(ethylenevinyl alcohol) and cellulose acetate.

For example, the aforesaid poly(ethylenevinyl alcohol) might be prepared by polymerizing vinyl acetate to form a poly(vinylacetate) which is then hydrolyzed (acid or base catalyzed) to form the poly(ethylenevinyl alcohol).
Such reaction of vinyl acetate and hydrolyzing of the resulting product is well known those skilled in such art.

For example, vinylalcohol/ethylene (60/40 mole ratio) copolymers can be obtained in powder forms at different molecular weights and crystallinities such as, for example, a molecular weight of about 11700 with an average particle size of about 11.5 microns or a molecular weight (weight average) of about 60,000 with an average particle diameter of less than 50 microns.

Various blends of starch and ethylenevinyl alcohol copolymers can then be prepared according to mixing procedures well known to those having skill in such art. For example, a procedure might be utilized according to a recitation in the patent publication by Bastioli, Bellotti and Del Trediu entitled A Polymer Composition Including Destructured Starch An Ethylene Copolymer, US-A-5,403,374.

Other plasticizers might be prepared, for example and so long as they have the appropriate Tg and starch compatibility requirements, by reacting one or more appropriate organic dibasic acids with aliphatic or aromatic diol(s) in a reaction which might sometimes be referred to as an esterification condensation reaction. Such esterification reactions are well known to those skilled in such art.

In the practice of this invention, additional inorganic fillers for the rubber composition may be used such as, for example, one or more of kaolin clay, talc, short discrete fibers, thermoplastic powders such as polyethylene and polypropylene particles, or other reinforcing or non-reinforcing inorganic fillers.

Such additional inorganic fillers are intended to be exclusive of, or to not include, pigments conventionally used in the compounding, or preparation of, rubber compositions such as zinc oxide, titanium oxide and the like.

Such additional short fibers may be, for example, of organic polymeric materials such as cellulose, aramid, nylon and polyester.

In practice, the said starch/synthetic plasticizer composite has a moisture content in a range of zero to 30, alternatively one to six, weight percent.

In practice, as hereinbefore pointed out, the elastomer reinforcement may be
(A) the starch/plasticizer composite or
(B) a combination of the starch/plasticizer composite and at least one of carbon black and precipitated silica or
(C) a combination of the starch/plasticizer, carbon black and/or precipitated silica and at least one other inorganic filler,
wherein a coupler is optionally used to couple the starch composite and the silica, if silica is used, to the diene based elastomer(s).

It is considered herein that, where desired, the starch composite can be used as
(A) a partial or
(B) complete replacement for carbon black and/or silica reinforcement for sulfur vulcanizable elastomers, depending somewhat upon the properties desired for the cured, or vulcanized, rubber composition.

In practice, it is generally preferred that the rubber reinforcing carbon black is used in conjunction with the starch composite in an amount of at least 5 and preferably at least 35 phr of carbon black, depending somewhat upon the structure of the carbon black. Carbon black structure is often represented by its DBP (dibutylphthalate) value. Reinforcing carbon blacks typically have a DBP number in a range of 40 to 400 cc/100 gm, and more usually in a range of 80 to 300 (ASTM D 1265). If the carbon black content is used with a view to providing an elastomer composition with a suitable electrical conductivity to retard or prevent appreciable static electricity build up, a minimum amount of carbon black in the elastomer composition might be, for example, about 10 phr if a highly electrically conductive carbon black is used, otherwise usually at least about 25 and often at least about 35 phr of carbon black is used.

If desired, and on a practical basis, it is usually preferred that the coupling agent for the starch/plasticizer composite can be the same coupling as could be used for the silica, if silica is used as well as for the diene-based elastomer having the hydroxyl and/or carboxyl groups. Thus, it is considered herein that the moiety of the coupling agent reactive with the surface of the starch/plasticizer composite is also reactive with the hydroxyl (eg. silanol) groups, and/other reactive groups typically on the surface of the silica.

It is important to appreciate that, preferably, the starch composite is not used as a total replacement for carbon black and/or silica in an elastomer composition. Thus, in one aspect, it is considered that the starch composite is to be typically used as a partial replacement for carbon black and/or silica reinforcement for sulfur vulcanizable elastomers.

It is important to appreciate that, while the starch may be used in combination with the starch/plasticizer composite, they are not considered herein as equal alternatives. Thus, while starch might sometimes be considered suitable as a reinforcement for the elastomer composition together with the coupling agent, the starch/plasticizer composite itself may be considered more desirable for some applications, even when used without a coupler.

If silica is used as a reinforcement together with carbon black, the weight ratio of silica to carbon black is desirably in a weight ratio in a range of 0.1/1 to 10/1, thus at least 0.1/1, alternatively at least 0.9/1, optionally at least 3/1 and sometimes at least 10/1.

The weight ratio of said coupling agent to the starch composite and silica, if silica is used, may, for example, be in a range of 0.01/1 to 0.2/1 or even up to 0.4/1.

The starch is typically composed of amylose units and/or amylopectin units. These are well known components of starch. Typically, the starch is composed of a combination of the amylose and amylopectin units in a ratio of about 25/75. A somewhat broader range of ratios of amylose to amylopectin units is recited herein in order to provide a starch for the starch composite which interact with the plasticizer somewhat differently. For example, it is considered herein that suitable ratios may be from 20/80 up to 100/0, although a more suitable range is considered to be 15/85 to 35/63.

The starch can typically be obtained from naturally occurring plants, as hereinbefore referenced. The starch/plasticizer composition can be present in various particulate forms such as, for example, fibrils, spheres or macromolecules, which may, in one aspect, depend somewhat upon the ratio of amylose to amylopectin in the starch as well as the plasticizer content in the composite.

The relative importance, if any, of such forms of the starch is the difference in their reinforcing associated with the filler morphology. The morphology of the filler primarily determines the final shape of the starch composite within the elastomer composition, in addition, the severity of the mixing conditions such as high shear and elevated temperature can allow to optimize the final filler morphology. Thus, the starch composite, after mixing, may be in a shape of one or more of hereinbefore described forms.

It is important to appreciate that the starch, by itself, is hydrophilic in nature, meaning that it has a strong tendency to bind or absorb water. Thus, the moisture content for the starch and/or starch composite has been previously discussed herein. This is considered to be an important, or desirable, feature in the practice of this invention because water can also act somewhat as a plasticizer with the starch and which can sometimes associate with the plasticizer itself for the starch composite such as polyvinyl alcohol and cellulose acetate, or other plasticizer which contain similar functionalities such as esters of polyvinyl alcohol and/or cellulose acetate or any plasticizer which can depress the melting point of the starch.

Various grades of the starch/plasticizer composition can be developed to be used with various elastomer compositions and processing conditions.

The starch typically has a softening point in a range of 180°C to 220°C, depending somewhat upon its ratio of amylose to amylopectin units, as well as other factors and, thus, does not readily soften when the rubber is conventionally mixed, for example, at a temperature in a range of 140°C to 165°C. Accordingly, after the rubber is mixed, the starch remains in a solid particulate form, although it may become somewhat elongated under the higher shear forces generated while the rubber is being mixed with its compounding ingredients. Thus, the starch remains largely incompatible with the rubber and is typically present in the rubber composition in individual domains.

However, it is now considered herein that providing starch in a form of a starch composite of starch and a plasticizer is particularly beneficial in providing such a composition with a softening point in a range of 110°C to 160°C.

The plasticizers can typically be combined with the starch such as, for example, by appropriate physical mixing processes, particularly mixing processes that provide adequate shear force.

The combination of starch and, for example, polyvinyl alcohol or cellulose acetate, is referred to herein as a "composite". Although the exact mechanism may not be completely understood, it is believed that the combination is not a simple mixture but is a result of chemical and/or physical interactions. It is believed that the interactions lead to a configuration where the starch molecules interact via the amylose with the vinyl alcohol, for example, of the plasticizer molecule to form complexes, involving perhaps chain entanglements. The large individual amylose molecules are believed to be interconnected at several points per molecule with the individual amylopectine molecules as a result of hydrogen bonding (which might otherwise also be in the nature of hydrophilic interactions).

This is considered herein to be beneficial because by varying the content and/or ratios of natural and synthetic components of the starch composite it is believed to be possible to alter the balance between hydrophobic and hydrophilic interactions between the starch components and the plasticizer to allow, for example, the starch composite filler to vary in form from spherical particles to fibrils.

In particular, it is considered herein that adding a polyvinyl alcohol to the starch to form a composite thereof, particularly when the polyvinyl alcohol has a softening point in a range of 90°C to 130°C, can be beneficial to provide resulting starch/plasticizer composite having a softening point in a range of 110°C to 160°C, and thereby provide a starch composite for blending well with a rubber composition during its mixing stage at a temperature, for example, in a range of 110°C to 165°C or 170°C.

In a further aspect of the invention, a tire is provided having at least one component comprised of the said rubber composition of this invention.
Although not limited thereto, such tire components can be at least one of tread, tread base or tread under tread, tire innerliner, sidewall apexes, wedges for the tire shoulder, sidewall, carcass ply and breaker wire coating rubber compositions, bead insulation rubber composition and cushion or gumstrips for addition to various parts of the tire construction. As used herein, the tread and tread base may be collectively referred to herein as the "tread", or "circumferential tread". Such tire components are well known those skilled in such art.

As a feature of this invention, a tire is provided having a circumferential tread comprised of the said rubber composition of this invention with the aforesaid tire component, thus, being its tread. As is well known to those skilled in such art, such tire tread is typically designed to be ground-contacting.

As a further aspect of this invention, a tire is provided with sidewall apexes of the said rubber composition of this invention.

Historically, the more homogeneous the dispersion of rubber compound components into the rubber, the better the resultant cured properties of that rubber. It is considered herein that it is a particular feature of this invention that the starch composite mixes with the rubber composition, which contains the diene-based elastomer having the hydroxyl and/or carboxyl functionality, during the rubber mixing under high shear conditions and at a temperature in a range of 140°C to 165°C, in a manner that very good dispersion in the rubber mixture is obtained. This is considered herein to be important because upon mixing the elastomer composition containing the starch/plasticizer composite to a temperature to reach the melting point temperature of the composite, the starch composite will contribute to the development of high shearing forces which is considered to be beneficial to ingredient dispersion within the rubber composition. Above the melting point of the starch composite, for example, around 150°C, it will melt and maximize its reaction with the coupling agent.

In one aspect, such a rubber composition can be provided as being sulfur cured. The sulfur curing is accomplished in a conventional manner, namely, by curing under conditions of elevated temperature and pressure for a suitable period of time.

In the practice of this invention, as hereinbefore pointed out, the rubber composition is comprised of at least one diene-based elastomer which contains hydroxyl and/or carboxyl functionality. Thus, it is considered that the elastomer is a sulfur curable elastomer.

The diene based elastomer which does not contain hydroxyl and/or carboxy functionality may be selected from at least one of homopolymers of isoprene and 1,3-butadiene and copolymers of isoprene and/or 1,3-butadiene with a aromatic vinyl compound selected from at least one of styrene and alphamethylstyrene. Accordingly such elastomer, or rubber, may be selected, for example, from at least one of cis 1,4-polyisoprene rubber (natural and/or synthetic, and preferably natural rubber), 3,4-polyisoprene rubber, styrene/butadiene copolymer rubbers, isoprene/butadiene copolymer rubbers, styrene/isoprene copolymer rubbers, styrene/isoprene/butadiene terpolymer rubbers, cis 1,4-polybutadiene rubber and medium to high vinyl polybutadiene rubber having a vinyl 1,2- content in a range of 15 to 85 percent and emulsion polymerization prepared butadiene/acrylonitrile copolymers. Such medium to high vinyl polybutadiene rubber may be more simply referred to herein as a high vinyl polybutadiene.

The rubber composition is preferably of at least two diene based elastomers with one of the elastomers desired to contain the hydroxyl and/or carboxyl functionality.

The silicas preferably employed in this invention are precipitated silicas such as, for example, those obtained by the acidification of a soluble silicate, e.g., sodium silicate.

Such silicas might be characterized, for example, by having a BET surface area, as measured using nitrogen gas, preferably in the range of 40 to 600, and more usually in a range of 50 to 300 square meters per gram. The BET method of measuring surface area is described in the Journal of the American Chemical Society, Volume 60, Page 304 (1930).

The silica may also be typically characterized by having a dibutylphthalate (DBP) absorption value in a range of 50 to 400, and more usually 100 to 300 cm³/100g.

Various commercially available silicas may be considered for use in this invention such as, only for example herein, and without limitation, silicas commercially available from PPG Industries under the Hi-Sil trademark with designations 210, 243, etc; silicas available from Rhodia, as, for example, Zeosil 1165MP Zeosil 165GR and silicas available from Degussa AG with, for example, designations VN2 and VN3, as well as other grades of silica, particularly precipitated silicas, which can be used for elastomer reinforcement.

It is readily understood by those having skill in the art that the rubber composition would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

Typical amounts of tackifier resins, if used, comprise 0.5 to 10 phr, usually 1 to 5 phr. Typical amounts of processing aids comprise 1 to 50 phr. Such processing aids can include, for example, aromatic, napthenic, and/or paraffinic processing oils. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 1 to 10 phr. Typical amounts of waxes comprise 1 to 5 phr. Often microcrystalline waxes are used. Typical amounts of peptizers comprise 0.1 to 1 phr.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 4 phr, or even, in some circumstances, up to 8 phr.

Accelerators are used to control the time and/or temperature required for vulcanization and to improve the properties of the vulcanizate. In one embodiment, a single accelerator system may be used, i.e., primary accelerator. Conventionally and preferably, a primary accelerator(s) is used in total amounts ranging from 0.5 to 4, preferably 0.8 to 1.5, phr. In another embodiment, combinations of a primary and a secondary accelerator might be used with the secondary accelerator being used in smaller amounts (of 0.05 to 3 phr) in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound. The presence and relative amounts of sulfur vulcanizing agent, or peroxide cure systems, and accelerator(s), if used, are not considered to be an aspect of this invention which is more primarily directed to the use of said starch composite as a reinforcing filler in combination with a coupler and carbon black and/or silica.

The presence and relative amounts of the above additives are not considered to be an aspect of the present invention which is more primarily directed to the utilization of specified blends of rubbers, including elastomers which contain hydroxyl and/or carboxyl functionality, in rubber compositions, in combination with the said starch/plasticizer composite together with carbon black and/or optionally precipitated silica and/or non-carbon black or non-silica filler, and a coupling agent for the starch/plasticizer composite, elastomer which contains one or more of said functional groups and precipitated silica, as the case may be, for the reinforcement of the rubber.

The mixing of the rubber composition can be accomplished by methods known to those having skill in the rubber mixing art. For example, the ingredients are typically mixed in at least two stages, namely, at least one non-productive stage followed by a productive mix stage. The final curatives are typically mixed in the final stage which is conventionally called the "productive" mix stage in which the mixing typically occurs at a temperature, or ultimate temperature, lower than the mix temperature(s) than the preceding non-productive mix stage(s). The rubber, starch composite, and fillers such as carbon black and optional silica and coupler, and/or non-carbon black and non-silica fillers, are mixed in one or more non-productive mix stages. The terms "non-productive" and "productive" mix stages are well known to those having skill in the rubber mixing art.

The rubber compositions of this invention can be used for various purposes. For example, they may be used for various tire compounds. Such tires can be built, shaped, molded and cured by various methods which are known and will be readily apparent to those having skill in such art.

## Claims

1. A tire having a tread of a rubber composition comprising, based upon parts by weight per 100 parts by weight elastomer (phr):
(A) 100 parts by weight of at least one diene-based elastomer comprising:
(1) 20 to 50 phr of at least one elastomer selected from polymers of isoprene and/or 1,3-butadiene and from copolymers of styrene with isoprene and/or 1,3-butadiene, and correspondingly,
(2) 50 to 80 phr of at least one functionalized diene-based elastomer, and
(B) 30 to 180 phr of at least one elastomer reinforcing filler composed of:
(1) 1 to 180 phr of at least one starch/synthetic plasticizer composite, and
(2) 29 to 179 phr of at least one of carbon black and precipitated silica aggregates, and
(C) a coupling agent having a first moiety reactive with hydroxyl groups contained on the surface of said starch composite, with hydroxyl contained on said functionalized diene-based elastomer and with hydroxyl groups contained on the surface of said aggregates of precipitated silica, if said precipitated silica aggregates are used, and an additional moiety interactive with said elastomer which contains said functional groups and with said additional diene-based elastomer;
wherein said functionalized diene-based elastomer is selected from hydroxyl terminated polybutadiene and hydroxyl terminated polyisoprene, and
wherein said starch is composed of amylose units and amylopectin units in a ratio of 15/85 to 35/65 and has a softening point according to ASTM No. D1228 in a range of 180°C to 220°C; and said starch/plasticizer composite has a softening point in a range of 110°C to 170°C according to ASTM No. D1228.

2. The tire of claim 1, wherein said coupling agent is a bis(3-alkoxysilylalkyl) polysulfide having an average of from 2 to 2.6 sulfur atoms in its polylsulfidic bridge.

3. The tire of claim 1, wherein said coupling agent is bis(3-ethoxysilylpropyl) polysulfide having an average of from 2 to 2.6, or an average of from 3.5 to 4, sulfur atoms in its polysulfidic bridge.

## Patentansprüche

1. Reifen mit einer Lauffläche aus einer Kautschukzusammensetzung, welche, auf Basis von Gewichtsteilen pro 100 Gewichtsteile Elastomer (ThK), umfasst :
(A) 100 Gewichtsteile mindestens eines dienbasierten Elastomers, umfassend :
(1) 20 bis 50 ThK mindestens eines Elastomers, gewählt aus Polymeren von Isopren und/oder 1,3-Butadien und aus Copolymeren von Styrol mit Isopren und/oder 1,3-Butadien, und entsprechend
(2) 50 bis 80 ThK mindestens eines funktionalisierten dienbasierten Elastomers, und
(B) 30 bis 180 ThK mindestens eines Elastomerverstärkungsfüllstoffs, zusammengesetzt aus :
(1) ein bis 180 ThK mindestens eines Kompositmaterials aus Stärke und synthetischem Weichmacher, und
(2) 29 bis 179 ThK mindestens eines von Carbon Black und ausgefällten Silikaaggregaten, und
(C) ein Kopplungsmittel mit einem ersten Anteil, der mit an der Oberfläche besagten Stärkekomposits enthaltenen Hydroxylgruppen, mit an besagtem funktionalisiertem dienbasiertem Elastomer enthaltenen Hydroxyl- und/oder Carboxylgruppen, mit an der Oberfläche besagter Aggregate ausgefällten Silikas enthaltenen Hydroxylgruppen, falls besagte ausgefällte Silikaaggregate verwendet werden, reaktiv ist, und einem zusätzlichen Anteil, welcher mit besagtem Elastomer, das besagte funktionelle Gruppen enthält, und mit besagtem zusätzlichen dienbasierten Elastomer in Wechselwirkung tritt ;
wobei besagtes funktionalisiertes dienbasiertes Elastomer aus hydroxylterminiertem Polybutadien und hydroxylterminiertem Polyisopren ausgewählt ist, und
wobei besagte Stärke aus Amyloseeinheiten und Amylopektineinheiten in einem Verhältnis von 15 :85 bis 35 :65 zusammengesetzt ist und einen Erweichungspunkt gemäß ASTM Nr. D1228 in einem Bereich von 180 °C bis 220 °C hat ; und besagtes Stärke-Weichmacher-Material einen Erweichungspunkt in einem Bereich von 110 °C bis 170 °C gemäß ASTM Nr. D1228 hat.

2. Reifen von Anspruch 1, wobei besagtes Kopplungsmittel ein Bis(3-alkoxysilylalkyl)polysulfid mit einem Durchschnitt von 2 bis 2,6 Schwefelatomen in seiner Polysulfidbrücke ist.

3. Reifen von Anspruch 1, wobei besagtes Kopplungsmittel Bis(3-ethoxysilylpropyl)polysulfid mit einem Durchschnitt von 2 bis 2,6 oder einem Durchschnitt von 3,5 bis 4 Schwefelatomen in seiner Polysulfidbrücke ist.

## Revendications

1. Bandage pneumatique possédant une bande de roulement d'une composition de caoutchouc comprenant, en se basant sur des parties en poids par 100 parties en poids d'élastomère (phr) :
(A) à concurrence de 100 parties en poids, au moins un élastomère à base diénique comprenant :
(1) à concurrence de 20 à 50 phr, au moins un élastomère choisi parmi le groupe comprenant des polymères d'isoprène et/ou du 1,3-butadiène et des copolymères de styrène avec de isoprène et/ou du 1,3-butadiène, et de manière correspondante
(2) à concurrence de 50 à 80 phr, au moins un élastomère fonctionnalisé à base diénique ; et
(B) à concurrence de 30 à 180 phr, au moins un composé de matière de charge pour le renforcement d'élastomères, dont la composition comprend:
(1) à concurrence de 1 à 80 phr, au moins un composite amidon/plastifiant synthétique ; et
(2) à concurrence de 29 à 179 phr, au moins un membre choisi parmi le groupe comprenant du noir de carbone et des agrégats de silice précipitée ; et
(C) un agent de couplage possédant une première fraction apte à réagir avec les groupes hydroxyle contenus à la surface dudit composite d'amidon, avec les groupes hydroxyle contenus sur ledit élastomère fonctionnalisé à base diénique et avec les groupes hydroxyle contenus à la surface desdits agrégats de silice précipitée, et des fractions supplémentaires entrant en interaction avec ledit élastomère qui contient lesdits groupes fonctionnels et avec ledit élastomère supplémentaire à base diénique ;
ledit élastomère fonctionnalisé à base diénique étant choisi parmi le groupe comprenant du polybutadiène à terminaison hydroxyle et du polyisoprène à terminaison hydroxyle ; et
ledit amidon étant composé d'unités d'amylose et d'unités d'amylopectine dans le rapport de 15/85 à 35/65 et possède un point de ramollissement selon la norme ASTM n° D 1228 dans la plage de 180 °C à 220 °C et ledit composite amidon/plastifiant possédant un point de ramollissement selon la norme ASTM n° D 1228 dans la plage de 110 °C à 170 °C.

2. Bandage pneumatique selon la revendication 1, dans lequel ledit agent de couplage est un bis-(3-alcoxysilylalkyl) polysulfure possédant en moyenne de 2 à 2,6 atomes de soufre dans son pont polysulfure.

3. Bandage pneumatique selon la revendication 1, dans lequel ledit agent de couplage est un bis-(3-éthoxysilylalkyl) polysulfure possédant en moyenne de 2 à 2,6, ou une moyenne de 3,5 à 4 atomes de soufre dans son pont polysulfure.
